# EUROPEAN PATENT SPECIFICATION

(11) **EP 3 284 004 B1**
(45) Date of publication and mention of the grant of the patent: **04.08.2021**
(21) Application number: 16780927.6
(22) Date of filing: 15.04.2016
(51) Int. Cl.: G06F 21/55, H04L 29/06, G06F 21/56, H04L 9/32, G06F 21/57, G06Q 50/00

(54) **QUANTITATIVE SECURITY IMPROVEMENT SYSTEM BASED ON CROWDSOURCING**
QUANTITATIVES SICHERHEITSVERBESSERUNGSSYSTEM AUF DER BASIS VON CROWDSOURCING
SYSTÈME D'AMÉLIORATION DE SÉCURITÉ QUANTITATIVE SUR LA BASE D'UNE EXTERNALISATION OUVERTE

(30) Priority: 17.04.2015 US 201514690340
(43) Date of publication of application: 21.02.2018
(73) Proprietor: CA, Inc., San Jose, CA 95131 (US)
(72) Inventor: MITAL, Amit, Mountain View, CA 94043 (US); NACHENBERG, Carey S., Mountain View, CA 94043 (US); EFSTATHOPOULOS, Petros, Mountain View, CA 94043 (US)
(74) Representative: Dilg, Haeusler, Schindelmann Patentanwaltsgesellschaft mbH
(86) International application number: PCT/US2016/027937
(87) International publication number: WO 2016/168733

(56) References cited:
- US-A1- 2004 109 255
- US-A1- 2007 240 220
- US-A1- 2011 055 925
- US-A1- 2013 179 938
- US-A1- 2014 373 162
- KAREN SCARFONE ET AL: "A framework for measuring the vulnerability of hosts", INFORMATION TECHNOLOGY, 2008. IT 2008. 1ST INTERNATIONAL CONFERENCE ON, IEEE, PISCATAWAY, NJ, USA, 18 May 2008 (2008-05-18), pages 1-4, XP031319206, ISBN: 978-1-4244-2244-9
- DAVID J JOHN ET AL: "Evolutionary based moving target cyber defense", GENETIC AND EVOLUTIONARY COMPUTATION COMPANION, ACM, 2 PENN PLAZA, SUITE 701 NEW YORK NY 10121-0701 USA, 12 July 2014 (2014-07-12), pages 1261-1268, XP058052362, DOI: 10.1145/2598394.2605437 ISBN: 978-1-4503-2881-4
- MICHAEL CROUSE ET AL: "A moving target environment for computer configurations using Genetic Algorithms", CONFIGURATION ANALYTICS AND AUTOMATION (SAFECONFIG), 2011 4TH SYMPOSIUM ON, IEEE, 31 October 2011 (2011-10-31), pages 1-7, XP032079142, DOI: 10.1109/SAFECONFIG.2011.6111663 ISBN: 978-1-4673-0401-6

## Description

### Technical Field

This disclosure pertains generally to computer security, and more specifically to quantifying the efficacy of security products and practices, based on telemetry data collected from a plurality of computer systems.

### Background

Contemporary computer security software packages have many features and configuration options. Users at both the enterprise and individual level frequently do not know how to effectively configure their security products, and have no hard quantitative data about the efficacy of different features or settings. Instead, customers deploy security software products of unknown effectiveness, and either use default settings or attempt to configure the numerous options with limited or no understanding of the implications.

A similar issue applies to vendors of security software. They instruct potential customers to deploy specific products and activate certain features, promising better protection against malicious activity once having done so. However, the vendors do not have any proof or quantification of the benefits provided by the systems they are selling. Instead, customers must take the vendors word that the product is effective. This makes sales far more difficult.

It would be desirable to address these issues.

US 2013/179938 A1 relates to security policy management using incident analysis.

A document authored by Scarfone and Grance, entitled "A Framework for Measuring the Vulnerability of Hosts", published in May 2008, relates to a framework for measuring the vulnerability of individual hosts based on current and historical operational data for vulnerabilities and attacks.

A document authored by John et al, entitled "Evolutionary Based Moving Target Cyber Defense", published in July 2014, relates to a comparison between two genetic algorithms to create a Moving Target defense, the primary difference between the two is based on their approaches to mutation; one mutates values, and the other modifies the domains from which values are chosen.

A document authored by Crouse and Fulp, entitled "A Moving Target Environment for Computer Configurations Using Genetic Algorithms", published in October 2011, relates to how a Genetic Algorithm (GA) can be employed to find temporally and spatially diverse secure computer configurations.

### Summary

The efficacy of security products and practices is quantified, based on monitored activities and conditions on multiple computing devices over time. More specifically, a set of metrics is defined, specifying what criteria concerning computer security systems are to be measured and quantified. This can include, for example, positive and negative computer security incidents, as well factors such as user time spent administering security products or the frequency with which defaults settings or actions are overridden. Telemetry data concerning the defined metrics are collected from across a plurality of computers, such as the customer base of a security product vendor, a subset of the customer base, the computers within a given organization (or department) etc. The telemetry data in question can be in the form of data that explicitly or implicitly concerns the metrics being quantified, at any level of granularity. Security configuration information such as the deployments and settings of security systems on computing devices is monitored. This monitored information tracks what security products are deployed on which machines, and how these products are configured (e.g., which options are enabled, which settings are selected, etc.).

Collected telemetry is correlated with monitored configuration information. This enables automatic determination of what security product deployments and settings are in place (as tracked per the monitored configuration information) when specific security incidents, operations and other types of actions (good and bad) occur under given circumstances (as tracked per the collected telemetry). The determined correlations are amalgamated, which has the effect of maintaining a current collection of correlation information concerning what security product deployments and settings are in place under what circumstances as multiple measured security incidents and/or other security related activities occur on multiple computer systems over time. The amalgamated correlation information concerning the deployments, system settings and other circumstances under which security incidents and/or other security related activities occur is analyzed. The efficacy of specific security products and configurations is quantified, based on the ongoing analysis of this correlation information as computer security products are deployed on different monitored computer systems and the settings and configurations are adjusted and modified. The resulting quantifications can be used in a number of ways, such to make recommendations to security product users concerning changes to be made to their current settings, configurations, deployments and the like, backed up by specific hard data. Other possible uses are in the context of sales and/or marketing tools, and computer security insurance actuarial calculations.

The features and advantages described in this summary and in the following detailed description are not all-inclusive, and particularly, many additional features and advantages will be apparent to one of ordinary skill in the relevant art in view of the drawings, specification, and claims hereof. Moreover, it should be noted that the language used in the specification has been principally selected for readability and instructional purposes, and may not have been selected to delineate or circumscribe the inventive subject matter, resort to the claims being necessary to determine such inventive subject matter.

### Brief Description of the Drawings

Figure 1 is a block diagram of an exemplary network architecture in which a security information quantifying system can be implemented, according to some embodiments.
Figure 2 is a block diagram of a computer system suitable for implementing a security information quantifying system, according to some embodiments.
Figure 3 is a high level block diagram of the operation of a security information quantifying system, according to some embodiments.

The Figures depict various embodiments for purposes of illustration only. One skilled in the art will readily recognize from the following discussion that alternative embodiments of the structures and methods illustrated herein may be employed without departing from the scope defined in the appended claims.

### Description

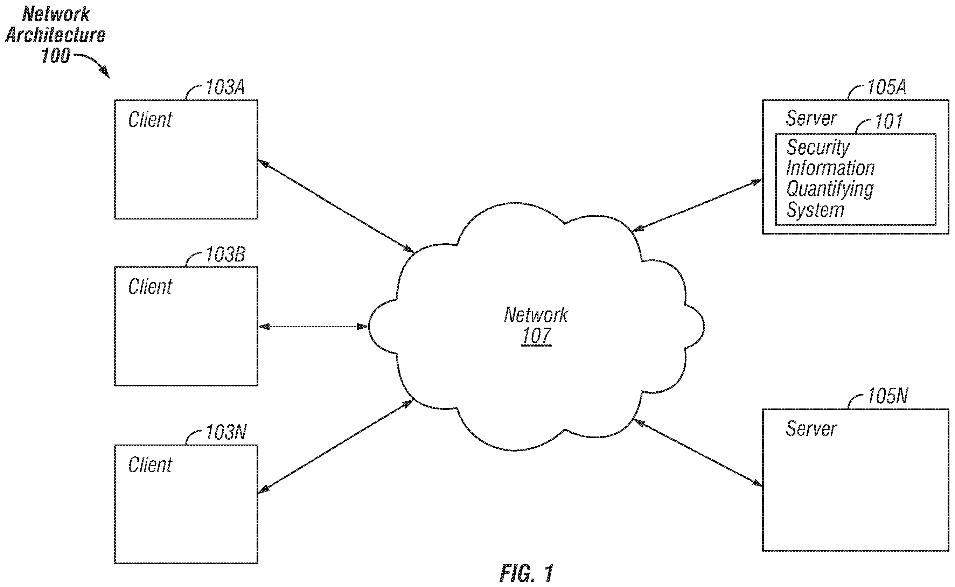

Figure 1 is a block diagram illustrating an exemplary network architecture 100 in which a security information quantifying system 101 can be implemented. The illustrated network architecture 100 comprises multiple clients 103A, 103B and 103N, as well as multiple servers 105A and 105N. In Figure 1, the security information quantifying system 101 is illustrated as residing on server 105A. It is to be understood that this is an example only, and in various embodiments various functionalities of this system 101 can be instantiated on a client 103, a server 105, or can be distributed between multiple clients 103 and/or servers 105.

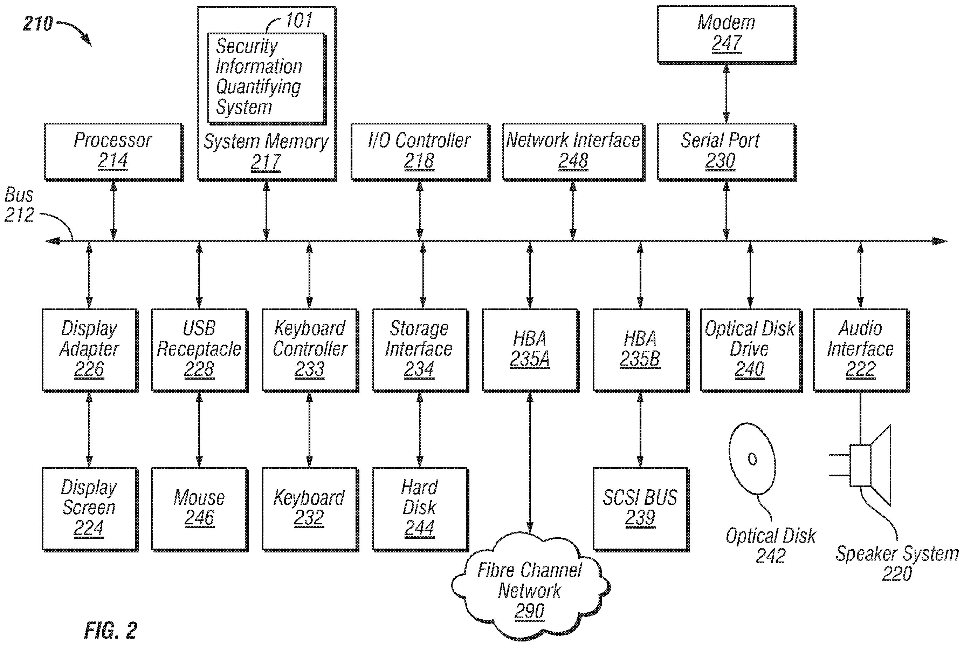

Clients 103 and servers 105 can be implemented using computer systems 210 such as the one illustrated in Figure 2 and described below. The clients 103 and servers 105 are communicatively coupled to a network 107, for example via a network interface 248 or modem 247 as described below in conjunction with Figure 2. Clients 103 are able to access applications and/or data on servers 105 using, for example, a web browser or other client software (not shown). Clients 103 can but need not be in the form of mobile computing devices, comprising portable computer systems 210 capable of connecting to a network 107 and running applications. Such mobile computing devices are sometimes referred to as smartphones, although many mobile phones not so designated also have these capabilities. Tablet computers, wearable computing devices and laptop computers are other examples of mobile computing devices.

Although Figure 1 illustrates three clients 103 and two servers 105 as an example, in practice many more (or fewer) clients 103 and/or servers 105 can be deployed. In one embodiment, the network 107 is in the form of the Internet. Other networks 107 or network-based environments can be used in other embodiments.

Figure 2 is a block diagram of a computer system 210 suitable for implementing a security information quantifying system 101. Clients 103 and servers 105 can all be implemented in the form of such computer systems 210. As illustrated, one component of the computer system 210 is a bus 212. The bus 212 communicatively couples other components of the computer system 210, such as at least one processor 214, system memory 217 (e.g., random access memory (RAM), read-only memory (ROM), flash memory, an input/output (I/O) controller 218, an audio output interface 222 communicatively coupled to an audio output device such as a speaker 220, a display adapter 226 communicatively coupled to a video output device such as a display screen 224, one or more interfaces such as Universal Serial Bus (USB) ports 228, serial ports 230, parallel ports (not illustrated), etc., a keyboard controller 233 communicatively coupled to a keyboard 232, a storage interface 234 communicatively coupled to one or more hard disk(s) 244 (or other form(s) of storage media), a host bus adapter (HBA) interface card 235A configured to connect with a Fibre Channel (FC) network 290, an HBA interface card 235B configured to connect to a SCSI bus 239, an optical disk drive 240 configured to receive an optical disk 242, a mouse 246 (or other pointing device) coupled to the bus 212, e.g., via a USB port 228, a modem 247 coupled to bus 212, e.g., via a serial port 230, and one or more wired and/or wireless network interface(s) 248 coupled, e.g., directly to bus 212.

Other components (not illustrated) may be connected in a similar manner (e.g., document scanners, digital cameras, printers, etc.). Conversely, all of the components illustrated in Figure 2 need not be present (e.g., smartphones and tablets typically do not have optical disk drives 240, external keyboards 242 or external pointing devices 246, although various external components can be coupled to mobile computing devices via, e.g., USB ports 228). In different embodiments the various components can be interconnected in different ways from that shown in Figure 2.

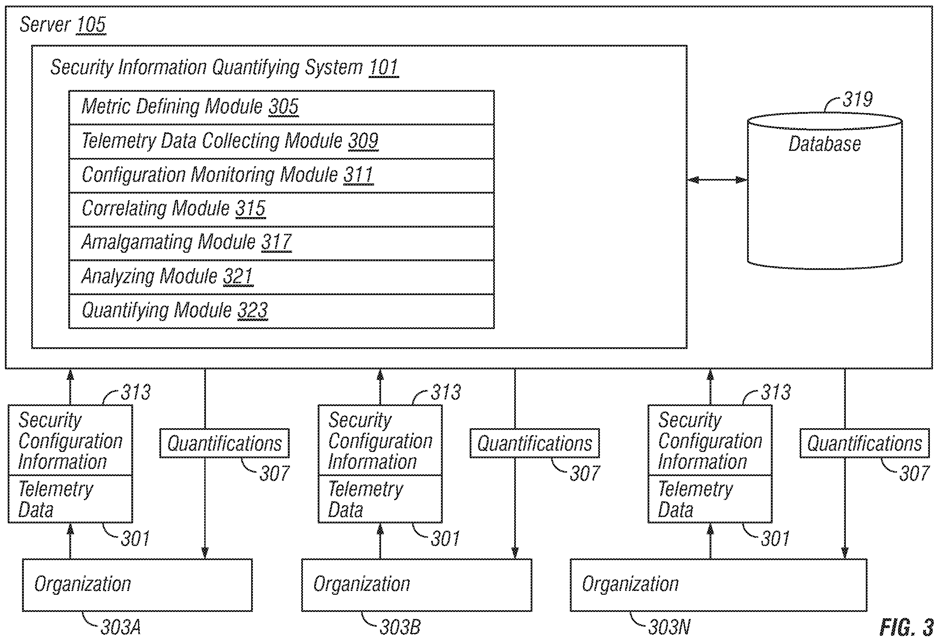

The bus 212 allows data communication between the processor 214 and system memory 217, which, as noted above may include ROM and/or flash memory as well as RAM. The RAM is typically the main memory into which the operating system and application programs are loaded. The ROM and/or flash memory can contain, among other code, the Basic Input-Output system (BIOS) which controls certain basic hardware operations. Application programs can be stored on a local computer readable medium (e.g., hard disk 244, optical disk 242, flash memory) and loaded into system memory 217 and executed by the processor 214. Application programs can also be loaded into system memory 217 from a remote location (i.e., a remotely located computer system 210), for example via the network interface 248. In Figure 2, the security information quantifying system 101 is illustrated as residing in system memory 217. The workings of the security information quantifying system 101 are explained in greater detail below in conjunction with Figure 3.

The storage interface 234 is coupled to one or more hard disks 244 (and/or other standard storage media). The hard disk(s) 244 may be a part of computer system 210, or may be physically separate and accessed through other interface systems.

The network interface 248 and/or modem 247 can be directly or indirectly communicatively coupled to a network 107 such as the internet. Such coupling can be wired or wireless.

Figure 3 illustrates a security information quantifying system 101 running on a server 105 in the cloud, and being accessed through a network 107 (e.g., the Internet) by computers 210 in multiple organizations 303. As described above, the functionalities of the security information quantifying system 101 can reside on specific computers 210 or be otherwise distributed between multiple computer systems 210, including within a fabric/cloud-based computing environment in which the functionality of the security information quantifying system 101 is provided as a service over a network 107. It is to be understood that although the security information quantifying system 101 is illustrated in Figure 3 as a single entity, the illustrated security information quantifying system 101 represents a collection of functionalities, which can be instantiated as a single or multiple modules as desired (instantiation of a specific, multiple module security information quantifying system 101 is illustrated in Figure 3). It is to be understood that the modules of the security information quantifying system 101 can be instantiated (for example as object code or executable images) within the system memory 217 (e.g., RAM, ROM, flash memory) of any computer system 210, such that when the processor 214 of the computer system 210 processes a module, the computer system 210 executes the associated functionality. As used herein, the terms "computer system," "computer," "client computer," "server computer" and "computing device" mean one or more computers configured and/or programmed to execute the described functionality. Additionally, program code to implement the functionalities of the security information quantifying system 101 can be stored on computer-readable storage media. Any form of tangible computer readable storage medium can be used in this context, such as magnetic, optical or solid state storage media. As used herein, the term "computer readable storage medium" does not mean an electrical signal separate from an underlying physical medium.

Figure 3 illustrates a security information quantifying system 101 running on a server 105, and quantifying the efficacy of security products and practices, based on telemetry data 301 collected from a plurality of computer systems 210. In one embodiment, the security information quantifying system 101 running on a server 105 runs on a central server 105 operated by a security product vendor and communicates with computers 210 of the customer base on which the vendor's security products are installed. In other embodiments, other arrangements are possible, such as the deployment of the security information quantifying system 101 on enterprise level computing infrastructure in communication with multiple computing devices 210 of the enterprise.

In Figure 3, three computer systems 210 are illustrated communicating with the security information quantifying system 101. It is to be understood that when deployed in the field, the security information quantifying system 101 can interact with orders of magnitude more computers 210 (e.g., hundreds, thousands, hundreds of thousands, etc.). These computers 210 can be in the form of computing devices 210 operated by individual users (e.g., desktop computers, laptop computers, smart phones, tablets, smart watches, smart objects, etc.), and/or at the level of administrated security computing infrastructure operated by organizations 303 (e.g., servers, firewalls, routers, gateways, switches, storage appliances, etc.). As the term is used herein, an organization 303 can be any entity which maintains at least one networked computer 210 with administrated computer security infrastructure. One example of an organization 303 is a corporation or other commercial enterprise that maintains a professionally administrated and secured computer network 107. Universities, government departments and other educational and/or not-for-profit institutions are other examples of organizations 303. An organization 303 can also be in the form of a small business, a private home network 107 or even an individual computer 210 connected to the Internet on which computer security infrastructure is installed (e.g., anti-malware software, a firewall, etc.).

As described in detail below, the security information quantifying system 101 enables the quantification of the efficacy of the various features and settings of different security products. Thus, users and customers can be provided with quantitative information on how to improve their security posture. In the past, users had to simply trust their security vendor that a product deployment was providing value. The security information quantifying system 101 collects and amalgamates large amounts of relevant telemetry data 301 from multiple computers 210 (e.g., from the various organizations 303 making up the customer base). The telemetry data 301 is correlated with the security configuration information 313 and analyzed to quantify the efficacy of deployments, features and configurations. The resulting quantifications 303 can be provided to interested parties such as customers, to help them purchase, deploy, and configure security products. In other words, the security information quantifying system 101 provides quantitative hard data demonstrating the effectiveness of computer security systems at any level of granularity (e.g., per product, per feature, at specific setting levels, efficiency of user, etc.).

More specifically, a metric defining module 305 of the security information quantifying system 101 defines a set of metrics of interest to parties, such as users and/or potential customers of computer security systems. In other words, the metrics defining module 305 defines what criteria concerning computer security systems are to be measured and quantified. The defined metrics can comprise things such as the number of malware infections per computing device 210 (or organization 303, department, etc.) per period of time (e.g., day, month, year); the number of leaked documents per enterprise (or a subgroup) per period of time; the mean time between malware infection and remediation within an organization 303; the number of false positives per specific number (e.g., 10, 100, 1000) of users per period of time, etc. The above examples are measurements of security shortcomings. Defined metrics can also be at level of security successes, such as the number of intrusion attempts blocked per machine 210 per period of time, the number of downloads of infected files prevented, etc. Metrics can also define security related factors to be measured other than direct product effectiveness, such as user time spent administering security products (e.g., how much time an administrator spends using the interface console of a security product). Such metrics can be defined at higher or lower levels of granularity as desired (e.g., any user, specific users, time spent using specific features and/or tools, such as remediating infected files, whitelisting blocked websites, etc.). Metrics can also concern factors such as the frequency with which defaults settings or actions are overridden (e.g., the number of times an administrator has to override a particular setting, or chose something other than the default action in a given circumstance). The set of metrics defines positive and/or negative factors concerning computer security and computer security products to measure and quantify. In some embodiments, the metric defining module 305 defines default metrics. In some embodiments, an administrator or the like can input metrics and/or edit defaults, through a user interface such as a GUI or command line based administrative console. In some embodiments, metrics can be updated dynamically based on factors such as changing security conditions detected in the field or updated marketing information and the like.

A telemetry data collecting module 309 collects telemetry data 301 concerning the defined metrics. This telemetry data 301 is collected from across a plurality of computers 210, such as the customer base of a security product vendor, a subset of the customer base, the computers 210 within a given organization 303 (or department) etc. The telemetry data 301 in question can be in the form of data that explicitly concerns the metrics being quantified, such as incidences of specific attacks being blocked by specific organizations 303, specific malicious code being detected on specific machines 210, etc. The telemetry data 301 can also be implicitly indicative of the metrics in question. For example, in one embodiment all files that arrive on any tracked computing device 210 are monitored (e.g., hashes of the files are taken and provided to the telemetry data collecting module 309). By tracking what files where downloaded to which machines 210 at what times, when a given file is later found to be malicious, the telemetry data collecting module 309 can use the earlier tracked telemetry data 301 concerning file downloads to determine more explicit telemetry 310, such as incidences of infections, times between infection and remediation, etc. The specific telemetry 301 to track is a variable design parameter, and can included any information explicitly or implicitly indicative of the defined metrics. The relationship between the tracked telemetry 301 and the metrics of direct interest can be at any level of complexity.

In some instances, given source organizations 303 and/or or individual computer systems 210 explicitly transmit(s) telemetry 301 to the telemetry data collecting module 309 of the security information quantifying system 101. For example, deployed organization and/or user level security products can be set to transmit this telemetry to a central server 105 maintained by a security product vendor. In other instances, the telemetry data collecting module 309 remotely reads or otherwise gleans this telemetry 301, for example by reading settings within the computer infrastructure of given source organizations 303 or individual computers 210. In these cases, an IT administrator or the like can set the relevant access permissions such that the telemetry data collecting module 309 can read the appropriate data.

Despite the specific route by which telemetry 301 is collected, the telemetry collecting module 309 can obtain (actively or passively) updated telemetry 301 periodically, thereby maintaining current information from the various sources. The frequency at which sources transmit (or at which the telemetry collecting module 309 actively gleans) updated telemetry 301 is a variable design parameter, which can be set as desired according to different scenarios.

As part of telemetry 301, the sources can provide, and the telemetry collecting module 309 collect, various metadata comprising information such as the identity, size, industry, type or other factors describing the source organization 303, times of various events being monitored, information concerning the hardware/software configurations of the source computers 210, etc. The specific format and/or content of the telemetry 301 is a variable design parameter.

In addition to the collection of telemetry 301, a configuration monitoring module 311 of the security information quantifying system 101 monitors current configuration information 313 concerning the deployments and settings of security systems on the multiple sources. In other words, the settings monitoring module 311 monitors what security products are deployed on which machines 210, and how these products are configured (e.g., which options are enabled, which settings are selected, etc.). The settings monitoring module 311 thus tracks security configuration information 313 concerning the various source organizations 303 computing devices 210. As with collected telemetry 301, the configuration information 313 can be transmitted to the configuration monitoring module 311 from the sources, or read from the sources by the configuration monitoring module 311. In either case, the configuration monitoring module 311 receives updated configuration information 313 periodically, thereby monitoring the current state of the various organizations 303 computing devices 210. The frequency at which update configuration information 313 is monitored is a variable design parameter, which can be set as desired according to different scenarios.

The specific configuration information 313 to monitor can vary between embodiments. One possible example is blocking thresholds set by specific sources which deploy a download manager (e.g., organization Alpha deployed a download manager to block downloads from sources with reputations below a specific threshold, whereas organization Beta set the threshold to a specific higher level, etc.). Another possible example is which organizations 303 activate/deactivate a specific heuristic based malicious detection feature. Yet another possible example is percentages of computing devices 210 within specific organizations 303 on which whitelisting is implemented. Of course, these are just non-exhaustive examples. Basically, the settings monitoring module 311 tracks information such as what security products are deployed where, which options and activated, what the settings are, when settings are changed, etc. The tracked configuration information 313 can be at any level of granularity, e.g., per server, client, mobile device, workgroup, enterprise, etc.

As with collected telemetry 301, various metadata can be included with the monitored security configuration information 313, describing the source organizations 303, times of configuration changes, information concerning the hardware/software configurations of the sources, etc. The specific format and/or content of the configuration information 313 is a variable design parameter.

A correlating module 315 of the security information quantifying system 101 correlates collected telemetry 301 with monitored configuration information 313, and determines what security product deployments and settings are in place (as tracked per the monitored configuration information 313) when specific security incidents, operations and other types of actions (good and bad) occur under given circumstances (as tracked per the collected telemetry 301). The correlating can be performed at any level of granularity depending upon the embodiment specific implementations of the defined metrics, collected telemetry 301 and monitored configuration information 313. The occurrence of the types of security incidents and/or other types of security related activities being measured and quantified (e.g., successful and/or failed attacks, malware infections and remediation thereof, true and false positives generated by a heuristic spam detection engine, time spent interfacing with product and tweaking settings, etc.) are correlated with the deployment and configuration of security products at the time of occurrence (e.g., which products were installed, what features/options were activated/deactivated, what settings and thresholds were in place, etc.). Note that the security product deployment and configuration information being correlated with the occurrences of security actions to be quantified is not limited to installations on the affected machines 210. For example, the deployment and configuration of security products on servers and/or network appliances within the organization's computing infrastructure is also a factor, as are deployments in the cloud (e.g., third party hosted security services), deployment's on computing devices used by customers of the organization 303 (e.g., mobile devices), etc. The level of granularity is variable both regarding the specificity of the security occurrences being measured and regarding the specificity of both the security configuration information 313 and any other circumstantial information concerning the affected machines 210 (e.g., installed operating system, organization / department / workgroup in which the affected computer 210 is deployed, etc.). As telemetry 301 is tracked and configuration information 313 is monitored over time, the correlating module 315 continues to perform correlations, thereby automatically maintaining current determinations of what security product deployments and settings are in place when measured security incidents and/or other security related activities occur.

An amalgamating module 317 of the security information quantifying system 101 amalgamates the determined correlations. This has the effect of maintaining a current collection of correlation information concerning what security product deployments and settings are in place under what circumstances as multiple measured security incidents and/or other security related activities occur on multiple computer systems 210 over time. A database 319 or other suitable information storage mechanism can be used to store and maintain the amalgamated correlation information.

An analyzing module 321 of the security information quantifying system 101 analyzes the amalgamated correlation information concerning the deployments, system settings and other circumstances under which security incidents and/or other security related activities occur. Based on the ongoing analysis of this correlation information as computer security products are deployed on different monitored computer systems 210 and the settings and configurations are adjusted and modified, a quantifying module 323 of the security information quantifying system 101 quantifies the efficacy of specific security products and configurations thereof. These quantifications 307 can be at any level of granularity, based on the defined metrics. As security configuration information 313 changes over time (e.g., specific products are deployed and various features are turned on and off, settings adjusted up and down, etc.), the updates are monitored as described above and correlated with tracked security incidents and/or other security related activities being measured. Thus, over time the database 319 of amalgamated correlation information grows. Based on observed increases and decreases in measured security events as changes occur in specific security configuration information 313 over time across the measured installation base, the quantifying module 323 quantifies the effectiveness of specific security products and the settings, features and configurations thereof. The specific format of the quantifications 307 (e.g., numerical on a scale, a percentage, a letter rating etc.) is a variable design parameter.

Quantifications 307 can be per any collection of multiple computers 210. In one embodiment, a security product vendor's entire install base is used in this capacity. In other embodiments, the analyzing of the amalgamated information can further include, for example, categorizing correlations based on the industry of the source organization 303 on which incidents/activities occurred (e.g., software, electronics, financial services, retailing, automotive, etc.). The industry of the organization 303 can be gleaned from the telemetry 301, in which it can be embedded explicitly, or from which it can be implicitly determined (e.g., from the name of organization 303, from the IP address from which the transmission originates, etc.). In other embodiments, information can be categorized based on the organization type from which it originated (e.g., publically traded corporation, privately held start-up, educational institution, government, home network, etc.) or the size thereof (e.g., more than 5000 computers, fewer than 100, individual user). Quantifications 307 can thus be made at the level of specific organization 303, department or even individual, type, size or industry of organization 303, etc.

Once quantifications 307 are calculated, the quantifications 307 can be utilized in a number of ways. In some embodiments, quantifications 307 are used to make recommendations to security product users concerning changes to be made to their current settings, configurations, deployments and the like, backed up by specific hard data. For example, quantified recommendations can be provided to specific users or organizations 303. This can take the form of transmitting alerts recommending to implement specific security practices / deploy specific products, along with quantified information describing the efficacy of taking the recommendations. Such recommendations can be transmitted to, for example, an IT administrator or the like, or to a software system installed on the target computer 210 which can in turn alert the responsible party, for example through a graphical administrative console or other user interface. The specific content of quantified recommendations can vary between embodiments based on factors such as the determined metrics and quantification formats. Some examples could be along the lines of 1) "You have the blocking threshold for your download manager set to 5/10. If you were to set the blocking threshold to 7/10 you would experience 22% fewer infections on the computing devices of your organization per month, and reduce your mean remediation time by 15%"; 2) "You have disabled the heuristic malware detection engine on the computing devices of your organization. If you were to enable this feature you could reduce the number of successful infections by 40%, and would experience no more than one false alarm per 100 users per year"; or 3) "You are currently running antivirus software from vendor X on your computing devices. If you replaced vendor X's antivirus software with that of vendor Y with the default settings, you would experience 53% fewer infections per 100 users per year, eliminating 360 remediation hours." Of course, these are just examples of the types of quantified recommendations that can be made.

The targeting of recipients can be an any level of specificity, e.g., the analysis of the amalgamated information can be used to identify specific users, groups, divisions, corporate policies, etc., that are more and less subject to specific incidents/activities over time, and quantified recommendations can be made to the responsible parties to adjust their security configurations more and less aggressively accordingly.

Another use case for the calculated quantifications 307 is as a marketing/sales tool. Conventionally, computer security products are sold and configured using a qualitative approach rather than a quantitative approach, making it difficult to justify security investment to the customer. The security information quantifying system 101 can provide quantifications 307 of the efficacy of security products and specific features thereof to members of a sales force and/or marketing team (e.g., through a graphical user interface / administrative counsel of a software sales tool). This approach provides actionable intelligence to aid in the marketing, sales and configuration of security products for maximum efficacy.

Another example use case is for the providers of computer security insurance (e.g., insurance against data loss or business downtime due to security breaches, malicious computer activity, etc.). Conventionally, companies that provide such insurance lack quantitative data to use as input for actuarial calculations, deciding whether to write policies and setting rates. Using quantifications 307 provided by the security information quantifying system 101, such companies can write policies, set rates, etc., based on the quantification of the security product configuration of the insured party, also allowing insurance purchasers to improve their configurations to be eligible for more favorable rates. These are simply examples of possible use cases for the quantifications 307 calculated and provided by the security information quantifying system 101.

As will be understood by those familiar with the art, the invention may be embodied in other specific forms without departing from the scope defined in the appended claims. Likewise, the particular naming and division of the portions, modules, agents, managers, components, functions, procedures, actions, layers, features, attributes, methodologies, data structures and other aspects are not mandatory or significant, and the mechanisms that implement the invention or its features may have different names, divisions and/or formats. The foregoing description, for purpose of explanation, has been described with reference to specific embodiments. However, the illustrative discussions above are not intended to be exhaustive or limiting to the precise forms disclosed. Many modifications and variations are possible in view of the above teachings. The embodiments were chosen and described in order to best explain relevant principles and their practical applications, to thereby enable others skilled in the art to best utilize various embodiments with or without various modifications as may be suited to the particular use contemplated.

## Claims

1. A computer-implemented method for quantifying the efficacy of security products and practices, based on monitored activities and conditions on a plurality of computing devices over time, the method comprising the steps of:
defining metrics that specify what criteria concerning computer security systems are to be quantified, the metrics including a frequency with which default settings are overridden and optionally one or more of:
measurements of security shortcomings, and
a level of security successes;
collecting telemetry data concerning the defined metrics from different ones of the plurality of computing devices;
monitoring security configuration information concerning different ones of the plurality of computing devices;
correlating collected telemetry data with monitored configuration information, enabling determination of what security product deployments and settings are in place when specific security actions occur on specific ones of the plurality of computing devices;
amalgamating correlations of telemetry data with security configuration information;
analyzing the amalgamated correlations of telemetry data with security configuration information; and
quantifying efficacy of specific security products and configurations, based on the analysis of the amalgamated correlations of telemetry data with security configuration information to generate one or more of:
a quantified efficacy based on a numerical scale,
a quantified efficacy based on a percentage, and
a quantified efficacy based on a letter rating.

2. The method of claim 1, wherein defining metrics further comprises:
defining metrics that measure occurrence of negative security incidents per period of time.

3. The method of claim 1, wherein defining metrics further comprises:
defining metrics that measure occurrence of positive security incidents per period of time.

4. The method of claim 1, wherein defining metrics further comprises:
defining metrics that measure time spent administering specific security products.

5. The method of claim 1, wherein defining metrics further comprises:
defining metrics that measure frequency with which default settings of specific security products are overridden.

6. The method of claim 1, wherein collecting telemetry data concerning defined metrics further comprises:
collecting information concerning occurrence of specific security incidents on specific ones of the plurality of computing devices.

7. The method of claim 1, wherein collecting telemetry data concerning defined metrics further comprises:
collecting information implicitly indicative of at least one defined metric.

8. The method of claim 1, wherein monitoring security configuration information concerning different ones of the plurality of computing devices further comprises:
monitoring what security products are deployed on which specific ones of the plurality of computing devices.

9. The method of claim 1, wherein monitoring security configuration information concerning different ones of the plurality of computing devices further comprises:
monitoring configurations of security products deployed on specific ones of the plurality of computing devices.

10. The method of claim 1, wherein correlating collected telemetry data with monitored configuration information further comprises:
correlating occurrences of specific types of security incidents with deployments and configurations of specific security products on computing devices at times of the occurrences.

11. The method of claim 1, wherein correlating collected telemetry data with monitored configuration information further comprises:
correlating an occurrence of a specific security incident on a first computing device with deployment and configuration of a specific security product on a second computing device at time of the occurrence.

12. The method of claim 1, wherein amalgamating correlations of telemetry data with security configuration information further comprises:
maintaining a current collection of correlation information concerning what security product deployments and settings are in place as measured security incidents occur on multiple computing devices over time.

13. The method of claim 1, further comprising:
transmitting recommendations to users concerning security product usage, based on quantified efficacy of specific security products and configurations.

14. At least one non-transitory computer readable medium for quantifying the efficacy of security products and practices, based on monitored activities and conditions on a plurality of computing devices over time, the at least one non-transitory computer readable medium storing computer executable instructions that, when loaded into computer memory and executed by at least one processor of at least one computing device, cause the at least one computing device to perform the following steps:
defining metrics that specify what criteria concerning computer security systems are to be quantified, the metrics including a frequency with which default settings are overridden and optionally one or more of:
measurements of security shortcomings, and
a level of security successes;
collecting telemetry data concerning the defined metrics from different ones of the plurality of computing devices;
monitoring security configuration information concerning different ones of the plurality of computing devices;
correlating collected telemetry data with monitored configuration information, enabling determination of what security product deployments and settings are in place when specific security actions occur on specific ones of the plurality of computing devices;
amalgamating correlations of telemetry data with security configuration information;
analyzing the amalgamated correlations of telemetry data with security configuration information; and
quantifying efficacy of specific security products and configurations, based on the analysis of the amalgamated correlations of telemetry data with security configuration information to generate one or more of:
a quantified efficacy based on a numerical scale,
a quantified efficacy based on a percentage, and
a quantified efficacy based on a letter rating.

15. A computer system for quantifying the efficacy of security products and practices, based on monitored activities and conditions on a plurality of computing devices over time, the computer system comprising:
means for defining metrics, the defined metrics specifying what criteria concerning computer security systems are to be quantified, the metrics including a frequency with which default settings are overridden and optionally one or more of:
measurements of security shortcomings, and
a level of security successes;
means for collecting telemetry data concerning the defined metrics from different ones of the plurality of computing devices;
means for monitoring security configuration information concerning different ones of the plurality of computing devices;
means for correlating collected telemetry data with monitored configuration information, enabling determination of what security product deployments and settings are in place when specific security actions occur on specific ones of the plurality of computing devices;
means for amalgamating correlations of telemetry data with security configuration information;
means for analyzing the amalgamated correlations of telemetry data with security configuration information; and
means for quantifying efficacy of specific security products and configurations, based on the analysis of the amalgamated correlations of telemetry data with security configuration information to generate one or more of:
a quantified efficacy based on a numerical scale,
a quantified efficacy based on a percentage, and
a quantified efficacy based on a letter rating.

## Patentansprüche

1. Ein computer-implementiertes Verfahren zum Quantifizieren der Wirksamkeit von Sicherheitsprodukten und -praktiken, basierend auf überwachten Aktivitäten und Bedingungen auf einer Mehrzahl von Computergeräten als Funktion der Zeit, wobei das Verfahren die folgenden Schritte aufweist:
Definieren von Metriken, die spezifizieren, welche Kriterien in Bezug auf die Computersicherheitssysteme quantifiziert werden sollen, wobei die Metriken eine Häufigkeit aufweisen, mit der Standardeinstellungen aufgehoben werden, und optional eines oder mehrere von:
Messungen von Sicherheitsmängeln und
ein Niveau von Sicherheitserfolgen;
Sammeln von Telemetriedaten in Bezug auf die definierten Metriken von verschiedenen aus der Mehrzahl von Computergeräten;
Überwachen von Sicherheitskonfigurationsinformationen in Bezug auf verschiedenen aus der Mehrzahl von Computergeräten;
Korrelieren von gesammelten Telemetriedaten mit überwachten Konfigurationsinformationen, wodurch eine Bestimmung ermöglicht wird, welche Sicherheitsprodukt-Verwendungen und -Einstellungen bereits vorhanden sind, wenn bestimmte Sicherheitsaktionen auf bestimmten aus der Mehrzahl von Computergeräten auftreten;
Zusammenführen von Korrelationen von Telemetriedaten mit Sicherheitskonfigurationsinformationen;
Analysieren der zusammengeführten Korrelationen von Telemetriedaten mit Sicherheitskonfigurationsinformationen; und
Quantifizieren einer Wirksamkeit von bestimmten Sicherheitsprodukten und -konfigurationen, basierend auf der Analyse der zusammengeführten Korrelationen von Telemetriedaten mit Sicherheitskonfigurationsinformationen, um eines oder mehrere der folgenden zu erzeugen:
eine quantifizierte Wirksamkeit basierend auf einer numerischen Skala,
eine quantifizierte Wirksamkeit basierend auf einem Prozentsatz und
eine quantifizierte Wirksamkeit basierend auf einer Buchstabenbewertung.

2. Das Verfahren gemäß Anspruch 1, wobei das Definieren von Metriken ferner Folgendes aufweist:
Definieren von Metriken, die das Auftreten von negativen Sicherheitsvorfällen pro Zeitspanne messen.

3. Das Verfahren gemäß Anspruch 1, wobei das Definieren von Metriken ferner Folgendes aufweist:
Definieren von Metriken, die das Auftreten von positiven Sicherheitsvorfällen pro Zeitspanne messen.

4. Das Verfahren gemäß Anspruch 1, wobei das Definieren von Metriken ferner Folgendes aufweist:
Definieren von Metriken, die den Zeitaufwand zum Verwalten von bestimmten Sicherheitsprodukten messen.

5. Das Verfahren gemäß Anspruch 1, wobei das Definieren von Metriken ferner Folgendes aufweist:
Definieren von Metriken, die die Häufigkeit messen, mit der Standardeinstellungen von bestimmten Sicherheitsprodukten aufgehoben werden.

6. Das Verfahren gemäß Anspruch 1, wobei das Sammeln von Telemetriedaten in Bezug auf definierte Metriken ferner Folgendes aufweist:
Sammeln von Informationen in Bezug auf Vorkommnisse von bestimmten Sicherheitsvorfällen auf bestimmten aus der Mehrzahl von Computergeräten.

7. Das Verfahren gemäß Anspruch 1, wobei das Sammeln von Telemetriedaten in Bezug auf definierte Metriken ferner Folgendes aufweist:
Sammeln von Informationen, die implizit für mindestens eine definierte Metrik indikativ ist.

8. Das Verfahren gemäß Anspruch 1, wobei das Überwachen von Sicherheitskonfigurationsinformationen in Bezug auf verschiedene aus der Mehrzahl von Computergeräten ferner Folgendes aufweist:
Überwachen, welche Sicherheitsprodukte auf welchen bestimmten aus der Mehrzahl von Computergeräten verwendet werden.

9. Das Verfahren gemäß Anspruch 1, wobei das Überwachen von Sicherheitskonfigurationsinformationen in Bezug auf die verschiedenen aus der Mehrzahl von Computergeräten ferner Folgendes aufweist:
Überwachen von Konfigurationen von Sicherheitsprodukten, die auf bestimmten aus der Mehrzahl von Computergeräten verwendet werden.

10. Das Verfahren gemäß Anspruch 1, wobei das Korrelieren von gesammelten Telemetriedaten mit überwachten Konfigurationsinformationen ferner Folgendes aufweist:
Korrelieren von Vorkommnissen von bestimmten Arten von Sicherheitsvorfällen mit Verwendungen und Konfigurationen von bestimmten Sicherheitsprodukten auf Computergeräten zu Zeitpunkten der Vorkommnisse.

11. Das Verfahren gemäß Anspruch 1, wobei das Korrelieren von gesammelten Telemetriedaten mit überwachten Konfigurationsinformationen ferner Folgendes aufweist:
Korrelieren eines Vorkommnisses von einem bestimmten Sicherheitsvorfall auf einem ersten Computergerät mit einer Verwendung und Konfiguration von einem bestimmten Sicherheitsprodukt auf einem zweiten Computergerät zum Zeitpunkt des Vorkommnisses.

12. Das Verfahren gemäß Anspruch 1, wobei das Zusammenführen von Korrelationen von Telemetriedaten mit Sicherheitskonfigurationsinformationen ferner Folgendes aufweist:
Aufrechterhalten einer aktuellen Sammlung von
Korrelationsinformationen in Bezug auf welche Sicherheitsprodukt-Verwendungen und -Einstellungen bereits vorhanden sind, wenn gemessene Sicherheitsvorfälle auf mehreren Computergeräten als Funktion der Zeit auftreten.

13. Das Verfahren gemäß Anspruch 1, ferner aufweisend:
Übertragen von Empfehlungen an Benutzer in Bezug auf die Verwendung von Sicherheitsprodukten, basierend auf quantifizierter Wirksamkeit von spezifischen Sicherheitsprodukten und Konfigurationen.

14. Mindestens ein nicht-flüchtiges computerlesbares Medium zum Quantifizieren der Wirksamkeit von Sicherheitsprodukten und -praktiken, basierend auf überwachten Aktivitäten und Bedingungen auf einer Mehrzahl von Computergeräten als Funktion der Zeit, wobei das mindestens eine nichtflüchtige computerlesbare Medium computerausführbare Befehle speichert, die, wenn sie in einen Computerspeicher geladen und von mindestens einem Prozessor von mindestens einem Computergerät ausgeführt werden, das mindestens eine Computergerät dazu veranlassen, die folgenden Schritte durchzuführen:
Definieren von Metriken, die angeben, welche Kriterien in Bezug auf die Computersicherheitssysteme quantifiziert werden sollen, wobei die Metriken eine Häufigkeit aufweisen, mit der Standardeinstellungen aufgehoben werden, und optional eines oder mehrere der folgenden:
Messungen von Sicherheitsmängeln und
ein Niveau von Sicherheitserfolgen;
Sammeln von Telemetriedaten in Bezug auf die definierten Metriken von verschiedenen aus der Mehrzahl von Computergeräten;
Überwachen von Sicherheitskonfigurationsinformationen in Bezug auf verschiedene aus der Mehrzahl von Computergeräten;
Korrelieren von gesammelten Telemetriedaten mit überwachten Konfigurationsinformationen, wodurch eine Bestimmung möglich wird, welche Sicherheitsprodukt-Verwendungen und -Einstellungen bereits vorhanden sind, wenn bestimmte Sicherheitsaktionen auf bestimmten aus der Mehrzahl von Computergeräten auftreten;
Zusammenführen von Korrelationen von Telemetriedaten mit Sicherheitskonfigurationsinformationen;
Analysieren der zusammengeführten Korrelationen von Telemetriedaten mit Sicherheitskonfigurationsinformationen; und
Quantifizieren einer Wirksamkeit von bestimmten Sicherheitsprodukten und -konfigurationen, basierend auf der Analyse der zusammengeführten Korrelationen von Telemetriedaten mit Sicherheitskonfigurationsinformationen, um eines oder mehrere der folgenden zu erzeugen:
eine quantifizierte Wirksamkeit basierend auf einer numerischen Skala,
eine quantifizierte Wirksamkeit basierend auf einem Prozentsatz und
eine quantifizierte Wirksamkeit basierend auf einer Buchstabenbewertung.

15. Ein Computersystem zum Quantifizieren der Wirksamkeit von Sicherheitsprodukten und -praktiken, basierend auf überwachten Aktivitäten und Bedingungen auf einer Mehrzahl von Computergeräten als Funktion der Zeit, wobei das Computersystem Folgendes aufweist:
Mittel zum Definieren von Metriken, wobei die definierten Metriken spezifizieren, welche Kriterien in Bezug auf die Computersicherheitssysteme quantifiziert werden sollen, wobei die Metriken eine Häufigkeit aufweisen, mit der Standardeinstellungen aufgehoben werden, und optional eines oder mehrere von:
Messungen von Sicherheitsmängeln und
ein Niveau von Sicherheitserfolgen;
Mittel zum Sammeln von Telemetriedaten in Bezug auf die definierten Metriken von verschiedenen aus der Mehrzahl von Computergeräten;
Mittel zum Überwachen von Sicherheitskonfigurationsinformationen in Bezug auf verschiedene aus der Mehrzahl von Computergeräten;
Mittel zum Korrelieren von gesammelten Telemetriedaten mit überwachten Konfigurationsinformationen, wodurch eine Bestimmung ermöglicht wird, welche Sicherheitsprodukt-Verwendungen und -Einstellungen bereits vorhanden sind, wenn bestimmte Sicherheitsaktionen auf bestimmten aus der Mehrzahl von Computergeräten auftreten;
Mittel zum Zusammenführen von Korrelationen von Telemetriedaten mit Sicherheitskonfigurationsinformationen;
Mittel zum Analysieren der zusammengeführten Korrelationen von Telemetriedaten mit Sicherheitskonfigurationsinformationen; und
Mittel zum Quantifizieren einer Wirksamkeit von bestimmten Sicherheitsprodukten und -konfigurationen, basierend auf der Analyse der zusammengeführten Korrelationen von Telemetriedaten mit Sicherheitskonfigurationsinformationen, um eines oder mehrere der folgenden zu erzeugen:
eine quantifizierte Wirksamkeit basierend auf einer numerischen Skala,
eine quantifizierte Wirksamkeit basierend auf einem Prozentsatz und
eine quantifizierte Wirksamkeit basierend auf einer Buchstabenbewertung.

## Revendications

1. Procédé mis en œuvre par ordinateur pour quantifier l'efficacité de produits et de pratiques de sécurité, sur la base d'activités et de conditions surveillées sur une pluralité de dispositifs informatiques au fil du temps, le procédé comprenant les étapes consistant à :
définir des paramètres qui spécifient quels critères concernant des systèmes de sécurité d'ordinateur doivent être quantifiés, les paramètres comprenant une fréquence à laquelle des réglages par défaut sont ignorés et optionnellement un ou plusieurs éléments parmi :
des mesures de failles de sécurité, et
un niveau de succès de sécurité ;
collecter des données de télémétrie concernant les paramètres définis à partir de dispositifs informatiques différents parmi la pluralité de dispositifs informatiques ;
surveiller des informations de configuration de sécurité concernant des dispositifs informatiques différents parmi la pluralité de dispositifs informatiques ;
mettre en corrélation des données de télémétrie collectées avec des informations de configuration surveillées, permettant la détermination de quels déploiements et réglages de produits de sécurité sont en place lorsque des actions de sécurité spécifiques surviennent sur des dispositifs informatiques spécifiques parmi la pluralité de dispositifs informatiques ;
amalgamer des corrélations de données de télémétrie à des informations de configuration de sécurité ;
analyser les corrélations amalgamées de données de télémétrie avec des informations de configuration de sécurité ; et
quantifier une efficacité de produits et de configurations de sécurité spécifiques, sur la base de l'analyse des corrélations amalgamées de données de télémétrie avec des informations de configuration de sécurité pour générer un ou plusieurs éléments parmi :
une efficacité quantifiée basée sur une échelle numérique,
une efficacité quantifiée basée sur un pourcentage, et
une efficacité quantifiée basée sur une notation en lettres.

2. Procédé selon la revendication 1, dans lequel la définition de paramètres comprend en outre :
la définition de paramètres qui mesurent une survenue d'incidents de sécurité négatifs par période de temps.

3. Procédé selon la revendication 1, dans lequel la définition de paramètres comprend en outre :
la définition de paramètres qui mesurent une survenue d'incidents de sécurité positifs par période de temps.

4. Procédé selon la revendication 1, dans lequel la définition de paramètres comprend en outre :
la définition de paramètres qui mesurent un temps passé à administrer des produits de sécurité spécifiques.

5. Procédé selon la revendication 1, dans lequel la définition de paramètres comprend en outre :
la définition de paramètres qui mesurent une fréquence à laquelle des réglages par défaut de produits de sécurité spécifiques sont ignorés.

6. Procédé selon la revendication 1, dans lequel la collecte de données de télémétrie concernant des paramètres définis comprend en outre :
la collecte d'informations concernant une survenue d'incidents de sécurité spécifiques sur des dispositifs informatiques spécifiques parmi la pluralité de dispositifs informatiques.

7. Procédé selon la revendication 1, dans lequel la collecte de données de télémétrie concernant des paramètres définis comprend en outre :
la collecte d'informations indiquant implicitement au moins un paramètre défini.

8. Procédé selon la revendication 1, dans lequel la surveillance d'informations de configuration de sécurité concernant des dispositifs informatiques différents parmi la pluralité de dispositifs informatiques comprend en outre :
la surveillance de quels produits de sécurité sont déployés sur quels dispositifs informatiques spécifiques parmi la pluralité de dispositifs informatiques.

9. Procédé selon la revendication 1, dans lequel la surveillance d'informations de configuration de sécurité concernant des dispositifs informatiques différents parmi la pluralité de dispositifs informatiques comprend en outre :
la surveillance de configurations de produits de sécurité déployés sur des dispositifs informatiques spécifiques parmi la pluralité de dispositifs informatiques.

10. Procédé selon la revendication 1, dans lequel la mise en corrélation de données de télémétrie collectées avec des informations de configuration surveillées comprend en outre :
la mise en corrélation de survenues de types spécifiques d'incidents de sécurité avec des déploiements et des configurations de produits de sécurité spécifiques sur des dispositifs informatiques aux moments des survenues.

11. Procédé selon la revendication 1, dans lequel la mise en corrélation de données de télémétrie collectées avec des informations de configuration surveillées comprend en outre :
la mise en corrélation d'une survenue d'un incident de sécurité spécifique sur un premier dispositif informatique avec un déploiement et une configuration d'un produit de sécurité spécifique sur un second dispositif informatique au moment de la survenue.

12. Procédé selon la revendication 1, dans lequel l'amalgame de corrélations de données de télémétrie à des informations de configuration de sécurité comprend en outre :
le maintien d'une collection courante d'informations de corrélation concernant quels déploiements et réglages de produits de sécurité sont en place alors que des incidents de sécurité mesurés surviennent sur de multiples dispositifs informatiques au fil du temps.

13. Procédé selon la revendication 1, comprenant en outre :
la transmission de recommandations à des utilisateurs concernant un usage de produits de sécurité, sur la base d'une efficacité quantifiée de produits et de configurations de sécurité spécifiques.

14. Au moins un support non transitoire lisible par ordinateur pour quantifier l'efficacité de produits et de pratiques de sécurité, sur la base d'activités et de conditions surveillées sur une pluralité de dispositifs informatiques au fil du temps, au moins un support non transitoire lisible par ordinateur stockant des instructions exécutables par ordinateur qui, lorsqu'elles sont chargées dans une mémoire d'ordinateur et exécutées par au moins un processeur d'au moins un dispositif informatique, amènent au moins un dispositif informatique à réaliser les étapes suivantes :
la définition de paramètres qui spécifient quels critères concernant des systèmes de sécurité d'ordinateur doivent être quantifiés, les paramètres comprenant une fréquence à laquelle des réglages par défaut sont ignorés et optionnellement un ou plusieurs éléments parmi :
des mesures de failles de sécurité, et
un niveau de succès de sécurité ;
la collecte de données de télémétrie concernant les paramètres définis à partir de dispositifs informatiques différents parmi la pluralité de dispositifs informatiques ;
la surveillance d'informations de configuration de sécurité concernant des dispositifs informatiques différents parmi la pluralité de dispositifs informatiques ;
la mise en corrélation de données de télémétrie collectées avec des informations de configuration surveillées, permettant la détermination de quels déploiements et réglages de produits de sécurité sont en place lorsque des actions de sécurité spécifiques surviennent sur des dispositifs informatiques spécifiques parmi la pluralité de dispositifs informatiques ;
le fait d'amalgamer des corrélations de données de télémétrie à des informations de configuration de sécurité ;
l'analyse des corrélations amalgamées de données de télémétrie avec des informations de configuration de sécurité ; et
la quantification d'une efficacité de produits et de configurations de sécurité spécifiques, sur la base de l'analyse des corrélations amalgamées de données de télémétrie avec des informations de configuration de sécurité pour générer un ou plusieurs éléments parmi :
une efficacité quantifiée basée sur une échelle numérique,
une efficacité quantifiée basée sur un pourcentage, et
une efficacité quantifiée basée sur une notation en lettres.

15. Système d'ordinateur pour quantifier l'efficacité de produits et de pratiques de sécurité, sur la base d'activités et de conditions surveillées sur une pluralité de dispositifs informatiques au fil du temps, le système d'ordinateur comprenant :
des moyens pour définir des paramètres, les paramètres définis spécifiant quels critères concernant des systèmes de sécurité d'ordinateur doivent être quantifiés, les paramètres comprenant une fréquence à laquelle des réglages par défaut sont ignorés et optionnellement un ou plusieurs éléments parmi :
des mesures de failles de sécurité, et
un niveau de succès de sécurité ;
des moyens pour collecter des données de télémétrie concernant les paramètres définis à partir de dispositifs informatiques différents parmi la pluralité de dispositifs informatiques ;
des moyens pour surveiller des informations de configuration de sécurité concernant des dispositifs informatiques différents parmi la pluralité de dispositifs informatiques ;
des moyens pour mettre en corrélation des données de télémétrie collectées avec des informations de configuration surveillées, permettant la détermination de quels déploiements et réglages de produits de sécurité sont en place lorsque des actions de sécurité spécifiques surviennent sur des dispositifs informatiques spécifiques parmi la pluralité de dispositifs informatiques ;
des moyens pour amalgamer des corrélations de données de télémétrie à des informations de configuration de sécurité ;
des moyens pour analyser les corrélations amalgamées de données de télémétrie avec des informations de configuration de sécurité ; et
des moyens pour quantifier une efficacité de produits et de configurations de sécurité spécifiques, sur la base de l'analyse des corrélations amalgamées de données de télémétrie avec des informations de configuration de sécurité pour générer un ou plusieurs éléments parmi :
une efficacité quantifiée basée sur une échelle numérique,
une efficacité quantifiée basée sur un pourcentage, et
une efficacité quantifiée basée sur une notation en lettres.
